(19) **Europäisches Patentamt European Patent Office Office européen des brevets**

(11) **EP 1 465 224 B1**

(12) **EUROPEAN PATENT SPECIFICATION**

(45) Date of publication and mention
of the grant of the patent:
**13.06.2007 Bulletin 2007/24**

(51) Int Cl.:
*H01H 37/76* *(2006.01)*     *H01H 85/06* *(2006.01)*

(21) Application number: **04006416.4**

(22) Date of filing: **17.03.2004**

(54) **Thermal fuse having a function of a current fuse**

Thermische Schmelzsicherung mit Stromfunktion

Fusible thermique avec fonction de courant

(84) Designated Contracting States:
**DE FI FR GB**

(30) Priority: **03.04.2003 JP 2003099783**

(43) Date of publication of application:
**06.10.2004 Bulletin 2004/41**

(73) Proprietor: **Uchihashi Estec Co., Ltd.**
**Chuo-ku,**
**Osaka-shi,**
**Osaka (JP)**

(72) Inventor: **Kawanishi, Toshiro**
**Chuo-ku**
**Osaka-shi**
**Osaka (JP)**

(74) Representative: **Fleuchaus, Leo et al**
**Fleuchaus & Gallo**
**Melchiorstrasse 42**
**81479 München (DE)**

(56) References cited:
**US-A1- 2002 113 685**

• **PATENT ABSTRACTS OF JAPAN vol. 2003, no. 05, 12 May 2003 (2003-05-12) & JP 2003 013166 A (SORUDAA KOOTO KK;ANZEN DENGU KK), 15 January 2003 (2003-01-15)**
• **PATENT ABSTRACTS OF JAPAN vol. 2000, no. 14, 5 March 2001 (2001-03-05) & JP 2000 322994 A (UCHIHASHI ESTEC CO LTD), 24 November 2000 (2000-11-24)**
• **PATENT ABSTRACTS OF JAPAN vol. 2002, no. 09, 4 September 2002 (2002-09-04) & JP 2002 150906 A (UCHIHASHI ESTEC CO LTD), 24 May 2002 (2002-05-24)**
• **PATENT ABSTRACTS OF JAPAN vol. 2002, no. 04, 4 August 2002 (2002-08-04) & JP 2001 345035 A (NEC SCHOTT COMPONENTS CORP), 14 December 2001 (2001-12-14)**
• **PATENT ABSTRACTS OF JAPAN vol. 013, no. 079 (C-571), 22 February 1989 (1989-02-22) & JP 63 266034 A (SUMITOMO ELECTRIC IND LTD), 2 November 1988 (1988-11-02) & DATABASE WPI Derwent Publications Ltd., London, GB; AN 1988-356452 "Conductor for fuse"**

**Description**

Background of the Invention

1. Field of the Invention

The present invention relates to a thin thermal fuse having a function of a current fuse.

In a secondary battery which is useful as a power source for a portable apparatus such as a notebook computer or a portable telephone, particularly, a lithium-ion secondary battery or a lithium polymer secondary battery, the heating temperature in an abnormal state is high because of its high energy density. Therefore, a battery circuit must be interrupted at an allowable maximum temperature of 85 to 95°C so as to prevent an accident such as explosion from occurring in the battery.

2. Description of the Prior Art

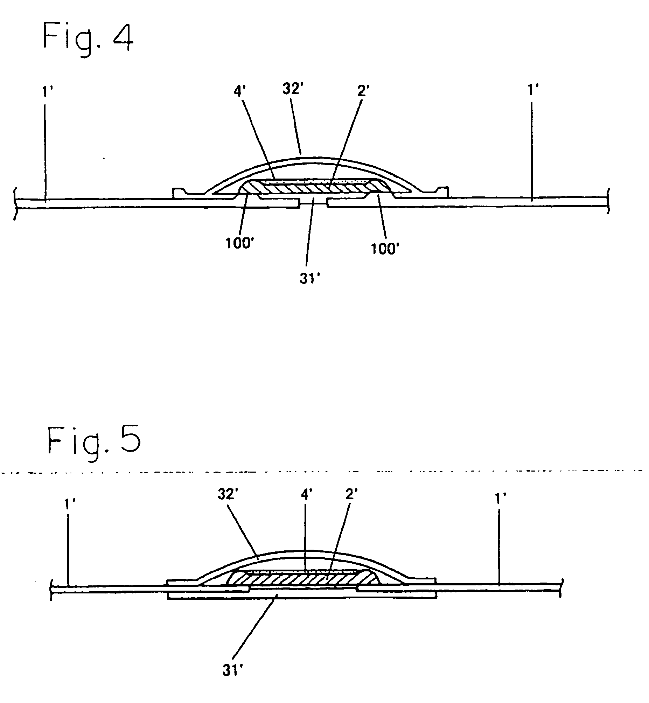

Such a protector is requested to be thin in order to realize mounting into a battery pack. Therefore, a thin thermal fuse such as shown in Fig. 4 or 5 is used in a protector.

In Fig. 4, 31' denotes a resin base film, and 1', 1' denote flat lead conductors in each of which a front end portion is secured to the rear face of the base film 31' and a part 100' of the front end portion is exposed from the upper face of the base film 31'. The reference numeral 2' denotes a fuse element which is bonded between the exposed parts 100', 100' of the two flat lead conductors 1', 1' by welding or the like, 32 denotes a resin cover film in which a peripheral portion is sealingly attached to the base film 31' that is horizontally held, and 4' denotes a flux which is applied to the periphery of the fuse element 2'.

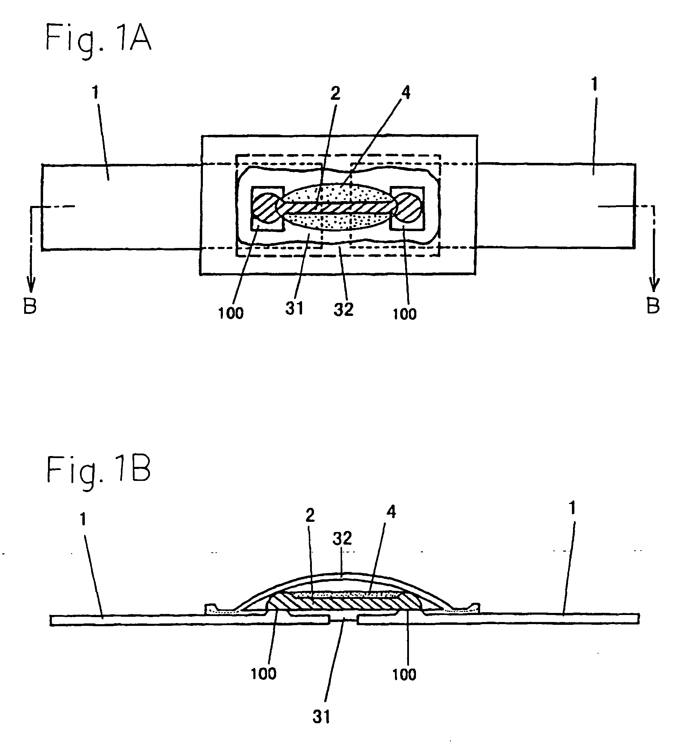

Referring to Fig. 5, 1', 1' denote flat lead conductors, and 2' denotes a fuse element which is bonded between the upper faces of tip end portions of the two lead conductors 1', 1' by welding or the like. The reference numerals 31' and 32' denote a resin base film and a resin cover film, respectively. Tip end portions of the flat lead conductors 1', 1', and the fuse element 2' are sandwiched between the films, and a peripheral portion of the resin cover film 32' is sealingly attached to the resin base film 31'. The reference numeral 4' denotes a flux.

Such a thermal fuse is placed so as to be thermally in contact with the body of a secondary battery. When the battery is caused to generate heat by any abnormality, a fuse element alloy of the thermal fuse is melted by the generated heat, and the molten alloy is divided and spheroidized because of the wettability with respect to the lead conductors or electrodes under the coexistence with the activated flux that has already melted. A battery circuit is interrupted as a result of advancement of the spheroid division.

In a secondary battery, an overcurrent of about 2 to 10 A sometimes flows for a long time period (about 1,000 seconds), thereby causing the battery to enter a dangerous state. A current fuse which operates at such an overcurrent is often used in the battery pack. In such a protection system, however, a current fuse is required in addition to a thermal fuse, and a large accommodation space must be ensured in the battery pack. Therefore, the system fails to fulfill the request of miniaturization of a battery pack, and hence is disadvantageous to a use in a portable apparatus.

In a conventional thin thermal fuse, the fuse body has a thickness of about 1.1 mm. Consequently, the sectional area of a fuse element, i.e., a low-melting fusible alloy piece is made small so that the resistance of the fuse element can be set to be relatively high. Therefore, Joule heat under the overcurrent of 2 to 10 A and 1,000 seconds enable the temperature of the fuse element to be raised to the melting point, thereby causing the fuse element to be fused off. Namely, such a thermal fuse may be expected also to exert a function of a current fuse.

The inventor performed experiments on the use of a thin thermal fuse as a current fuse. However, it was known that a conventional thin thermal fuse operates at a rush current and hence cannot be used also as a current fuse.

A rush current momentarily flows when a power supply is turned on, because of a transient phenomenon or a low circuit resistance at the turning-on due to the low temperature. In such a secondary battery, a rush current of about 50 to 100 A flows for 5 ms. A conventional thin thermal fuse operates at a rush current of this level, and therefore is hardly usable also as a current fuse. For example, a conventional thin thermal fuse in which a low-melting fusible alloy piece having an alloy composition of 43In-41Sn-13Cd-3Bi is used operates at a rush current of this level, and therefore cannot be used also as a current fuse.

The assignee of the present invention has already proposed a thin thermal fuse of an operating temperature of 85 to 95°C in which an alloy composition of 45 to 55% Bi and the balance In is used as a fuse element (Japanese Patent Application Laying-Open No. 2002-150906).

In the proposed thin thermal fuse, in order to prevent the operating temperature from being shifted by Joule heat of the fuse element, the resistance of the fuse element is set to be as low as possible. The fuse element is not intended to be fused off by the above-mentioned overcurrent of about 2 to 10 A and 1,000 seconds, or to be heated to the melting point.

However, the inventor has known that, in a thermal fuse in which a fuse element of an alloy containing a large amount of Bi is used, the high specific resistance of the alloy participates advantageously in the rush current resistance performance, and the thermal fuse suitably functions also as a current fuse for an overcurrent of the above-mentioned level, or about 2 to 10 A and 1,000 seconds. Namely, the inventor has known that a thin thermal fuse having a fuse element of 52In-48Bi in which the specific resistance is about 1.6 times that of a conventional fuse element (43In-41Sn-13Cd-3Bi is used as the alloy composition of the fuse element) does not operate at a rush current of the above level, and can be satisfactorily used as a current fuse.

The reason of the above is considered as follows.

When a thin thermal fuse is energized, an approximate temperature rise process of a fuse element can be deemed as a phenomenon that part of Joule heat of the fuse element is absorbed by the thermal capacity of the fuse element, and the amount of heat which has not been absorbed is dissipated through flat lead conductors. In this case, when the current is indicated by i, the electric resistance of the fuse element is indicated by r, the heat dissipation resistance of the flat lead conductors is indicated by R, and the thermal capacity of the fuse element is indicated by C, the temperature rise T of the fuse element is given by:

$$T = Ri^2 r(1 - e^{-t/RC}) \tag{1}$$

When the melting point of the fuse element is indicated by Tm, and the normal temperature is indicated by $T_0$, the operation characteristics of the current i and the operating time t can be obtained by setting T = (Tm - $T_0$) in Expression (1), and the following expression holds:

$$i = (Tm - T_0)^{1/2} / [RC(1 - e^{-t/RC})]^{1/2} \tag{2}$$

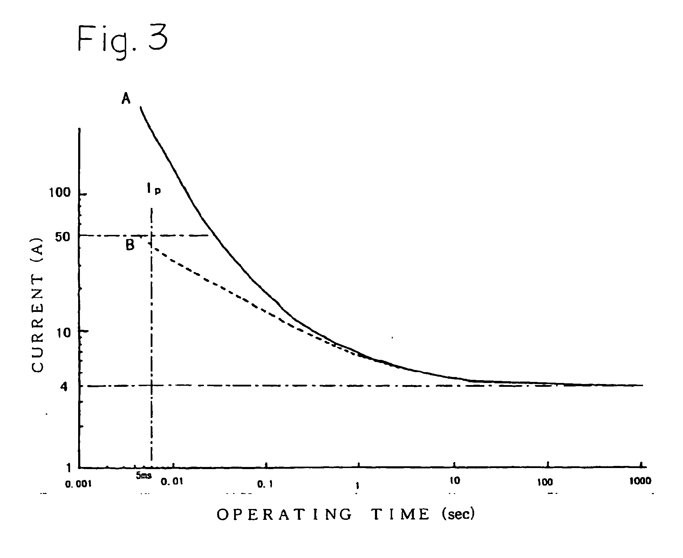

In Fig. 3, the curve A shows the operation characteristics of a thin thermal fuse in which 52In-48Bi is used as a fuse element, and the curve B shows those of a conventional thin thermal fuse.

In Fig. 3, the current $i_p$ shows the above-mentioned rush current (the current value: $i_p$, the duration time period: 5 ms). At the rush current, the thin thermal fuse in which 52In-48Bi is used as a fuse element does not operate at the rush current, and the conventional thin thermal fuse operates.

The reason of this is estimated as follows. In the thin thermal fuse in which 52In-48Bi having a large specific resistance is used as the fuse element, the volume of the low-melting fusible alloy piece is larger than that in the conventional thin thermal fuse. As a result, C in Expression (1) above is increased, and the operating current-time curve is shifted from the curve B to the curve A. Namely, the heat absorption of the fuse element largely participates in the transient state of the temperature rise due to Joule heat of the fuse element in the thin thermal fuse. When the sectional area of the fuse element is adequately increased to enhance the heat absorption ability, the temperature rise of the fuse element under a rush current can be suppressed to the melting point of the fuse element or lower.

Thermal fuse elements are known by the state of the art. For example JP 2000 322994 shows a thermal fuse having a function of a current fuse in which an alloy piece is connected between a pair of flat lead conductors and in which the alloy piece is sandwiched between a resin base film and a resin cover film, wherein a resistance of said alloy piece is set between 0.1mΩ to 400mΩ by reducing the cross section of the alloy piece with a notch-like cut-out, said fuse having an operating temperature between 50° C to 200° C and operates at a rush current of 50 to 100 A in less than 5 ms.

Furthermore, JP 2003 013166 is known wherein the fusible alloy for a thermal fuse includes Bi and In and has a melting temperature of about 100° C or lower.

Summary of the Invention

It is an object of the invention to provide a thin thermal fuse with a rush current resistance performance to enable the thin thermal fuse to be used also as a current fuse.

A thermal fuse having a function of a current fuse according to a first aspect of the invention is a thermal fuse in which a low-melting fusible alloy piece having an alloy composition containing 40 to 70% Bi is connected between a pair of flat lead conductors, a flux is applied to the low-melting fusible alloy piece,- and the flux-applied low-melting fusible alloy piece is sandwiched between a resin base film and a resin cover film to provide insulation, wherein a resistance of the low-melting fusible alloy piece is set so as to enable the low-melting fusible alloy piece to be fused off also by Joule heat due to an allowable maximum current of a secondary battery, the resistance being 4.5 to 50 mΩ. This way, the operating current of the low-melting fusible alloy piece at 5ms is larger than 100 A.

A thermal fuse having a function of a current fuse according to a second aspect of the invention is characterized in that, in the thin thermal fuse having a function of a current fuse, a melting point of the low-melting fusible alloy piece is 85 to 95°C, and the allowable maximum current is a current of 2 to 10 A and 1,000 seconds.

A thermal fuse having a function of a current fuse according to a third aspect of the invention is characterized in that, in the thin thermal fuse having a function of a current fuse according to the first or second aspect of the invention, front end portions of the pair of flat lead conductors are secured to a rear face of the resin base film, a part of each of the front end portions is exposed from a surface of the base film, the low-melting fusible alloy piece is connected between the exposed parts, the flux is applied to the low-melting fusible alloy piece, and an area above the base film is sealed by the resin cover film.

A thermal fuse having a function of a current fuse according to a fourth aspect of the invention is characterized in that, in the thin thermal fuse having a function of a current fuse according to the first or second aspect of the invention, the pair of flat lead conductors, and the flux-applied low-melting fusible alloy piece which is connected between upper faces of tip end portions of the lead conductors are sealed with being vertically sandwiched between the resin cover film and the resin base film.

A thermal fuse having a function of a current fuse according to a fifth aspect of the invention is characterized in that, in the thin thermal fuse having a function of a current fuse according to any one of the first to fourth aspects of the invention, a balance of the alloy composition containing 40 to 70% Bi is In and inevitable impurities.

A thermal fuse having a function of a current fuse according to a sixth aspect of the invention is characterized in that, in the thin thermal fuse having a function of a current fuse according to any one of the first to fourth aspects of the invention, a balance of the alloy composition containing 40 to 70% Bi is In, inevitable impurities, and 0.05 to 5% of at least one of Ag, Cu, Au, Sb, Ni, Pt, Pd, Ge, and P.

A thermal fuse having a function of a current fuse according to a seventh aspect of the invention is characterized in that, in the thin thermal fuse having a function of a current fuse according to any one of the first to sixth aspects of the invention, a ratio d/t of an outer diameter d of the low-melting fusible alloy piece to a thickness t of each of the flat lead conductors is 2 to 5.

A thermal fuse having a function of a current fuse according to an eighth aspect of the invention is characterized in that, in the thin thermal fuse having a function of a current fuse according to any one of the first to seventh aspects of the invention, a thickness from a lower face of the resin base film to an upper face of the resin cover film is 2.0 mm or smaller.

A thermal fuse having a function of a current fuse according to a ninth aspect of the invention is characterized in that, in the thin thermal fuse having a function of a current fuse according to any one of the first to eighth aspects of the invention, the flat lead conductors are made of nickel or an iron alloy.

Brief Description of the Drawings

Fig. 1 is a view showing an embodiment of a thermal fuse having a function of a current fuse according to a third aspect of the invention;

Fig. 2 is a view showing an embodiment of a thermal fuse having a function of a current fuse according to a fourth aspect of the invention;

Fig. 3 is a view showing results of measurements of operation characteristics of a thermal fuse having a function of a current fuse according to the invention, and a conventional thin thermal fuse;

Fig. 4 is a view showing an example of a conventional thin thermal fuse; and

Fig. 5 is a view showing another example of a conventional thin thermal fuse.

Detailed Description of the Preferred Embodiment

[Embodiment of the Invention]

Hereinafter, embodiments of the invention will be described with reference to the accompanying drawings. The thin thermal fuse having a function of a current fuse according to the invention is a thermal fuse in which a low-melting fusible alloy piece having an alloy composition containing 40 to 70% Bi is connected between a pair of flat lead conductors, a flux is applied to the low-melting fusible alloy piece, the flux-applied low-melting fusible alloy piece is sandwiched between a resin base film and a resin cover film to provide insulation. The thermal fuse is used as a protector for a secondary battery such as a lithium-ion secondary battery or a lithium polymer secondary battery, in a state where the thermal fuse is thermally in contact with the battery. The melting point and resistance of the low-melting fusible alloy piece are set so that the low-melting fusible alloy piece is fused off when the temperature of the battery is raised to an allowable maximum temperature of 85 to 95°C, or when the current reaches an allowable maximum of 50 to 100 A and 1,000 s.

In Fig. 1, (A) is a plan view showing an embodiment of a thin thermal fuse according to a third aspect of the invention, in partial section, and (B) is a section view taken along the line B-B in (A) of Fig. 1.

In Fig. 1, 31 denotes a resin base film, and 1, 1 denote flat lead conductors in each of which a front end portion is secured to the rear face of the base film 31 and a part 100 of the front end portion is exposed from the upper face of the base film 31. The reference numeral 2 denotes a fuse element which is bonded between the exposed parts 100, 100 of the two flat lead conductors 1, 1 by welding or the like. In the welding process, spot resistance welding or laser welding can be used. The reference numeral 32 denotes a resin cover film in which a peripheral portion is sealingly attached to the base film 31 that is horizontally held, and 4 denotes a flux which is applied to the periphery of the fuse element 2.

The part of the front end portion of each of the flat lead conductors can be exposed from the surface of the base film 31 by a method in which a projection is previously formed in the front end portion of the flat lead conductor by a drawing process, the front end portion of the flat lead conductor is fusion-bonded to the rear face of the base film under heating, and the projection is passed through and fusion-bonded to the base film. Alternatively, another method may be employed in which the front end portion of the flat lead conductor is fusion-bonded to the rear face of the base film under heating, and the part of the front end portion of the lead conductor is exposed from the surface of the base film by a drawing process.

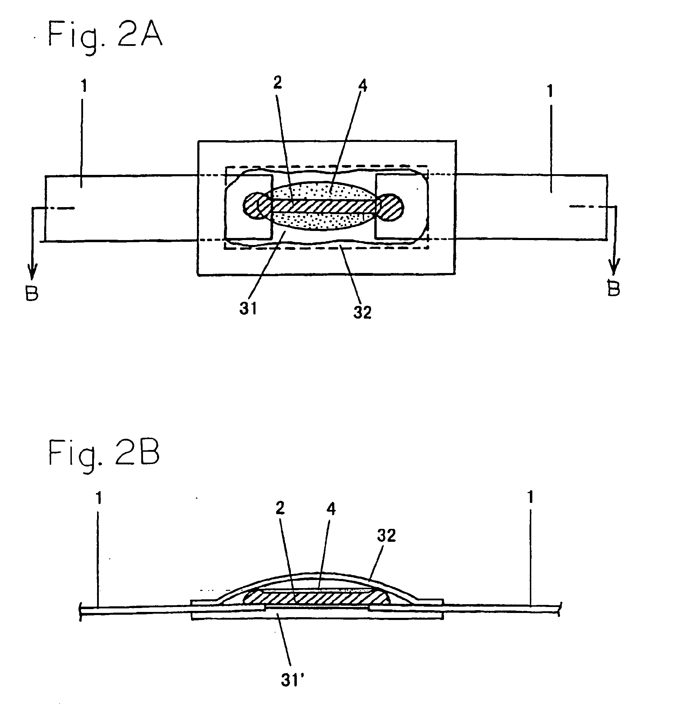

In Fig. 2, (A) is a plan view showing an embodiment of a thin thermal fuse according to a fourth aspect of the invention, in partial section, and (B) is a section view taken along the line B-B in (A) of Fig. 2.

In Fig. 2, 1, 1 denote flat lead conductors, and 2 denotes a fuse element which is bonded between the upper faces of tip end portions of the two flat lead conductors 1, 1 by welding or the like. In the welding process, spot resistance welding or laser welding can be used. The reference numeral 31 denotes a resin base film, and 32 denotes a resin cover film. The front end portions of the two flat lead conductors 1, 1, and the fuse element 2 are sandwiched between the resin films 31, 32, and a peripheral portion of the resin cover film 32 is sealingly attached to the resin base film 31 which is horizontally held. The reference numeral 4 denotes a flux which is applied to the periphery of the fuse element 2.

The thermal fuse having a function of a current fuse shown in Fig. 2 can be produced in the following manner. The fuse element is connected between the upper faces of the tip end portions of the two flat lead conductors by spot resistance welding, laser welding, or the like. Then, the front end portions of the two flat lead conductors 1, 1, and the fuse element 2 are sandwiched between the lower and upper resin films 31, 32, and the resin base film 31 is horizontally held on a base. Both end portions of the resin cover film 32 are pressed by a releasing chip such as a ceramic chip to be pressingly in contact with the flat lead conductors, respectively. During the press contacting process, the flat lead conductors may be heated. This heating can be conducted by electromagnetic induction heating, contacting a heat plate with the lead conductors, or the like. In electromagnetic induction heating, particularly, high-frequency magnetic fluxes interlink with the tip end portions of the lead conductors welded to end portions of the fuse element, via the upper or lower resin film, so that the tip end portions can be intensively heated. Therefore, electromagnetic induction heating is advantageous from the viewpoint of thermal efficiency. Because of the intensive heating, a middle portion of the fuse element which is remote from the end portions of the fuse element can be sufficiently suppressed from being heated, and hence such heating is safe from the aspect that the original shape of the fuse element is to be reserved.

In the embodiment shown in Fig. 2, the sealing between the flat lead conductors 1 and the resin films 31, 32 can be conducted by fusion bonding in the heating process on the flat lead conductors, and the sealing of the interface in which the lower and upper resin films 31, 32 are in direct contact with each other can be conducted realized by, for example, ultrasonic fusion bonding, high-frequency dielectric heating fusion bonding, or heat plate contact fusion bonding. It does not matter which one of the former fusion bonding and the latter fusion bonding is first conducted. For example, after the latter fusion bonding, the flux may be applied to the low-melting fusible alloy piece, and the former fusion bonding may be then conducted.

In the case where the thermal fuse having a function of a current fuse of the invention is energized by a current i under the external temperature $T_0$, when the resistance of the fuse element is indicated by r, the thermal capacity of the fuse element is indicated by C, and the thermal resistance of the lead conductors is indicated by R, the temperature Tx of the fuse element is given by:

$$Tx = T_0 + Ri^2r(1 - e^{-t/RC}) \tag{3}$$

The relationship between the current i and the time t when the thermal fuse having a function of a current fuse operates, i.e., when the temperature of the fuse element reaches the melting point Tm is given by:

$$i = (Tm - T_0)^{1/2}/[Rr(1 - e^{-t/RC})]^{1/2} \qquad (4)$$

In the thermal fuse having a function of a current fuse of the invention, the resistance r of the fuse element is set so that the fuse does not operate at a rush current of 50 to 100 A and 5 ms, but operates at an allowable maximum current of 2 to 10 A and 1,000 s.
The melting point $T_m$ of the fuse element is determined by the allowable maximum temperature of the battery, and also R (the thermal resistance of the flat lead conductors) is determined by the material of the flat lead conductors. Therefore, the resistance r of the fuse element is set so that the allowable maximum current i is 2 to 10 A at t = 1,000 s.
When the specific resistance of the fuse element is indicated by ρ, the diameter of the fuse element is indicated by d, and the length of the fuse element is indicated by L, the resistance r of the fuse element is given by:

$$r = 4\rho L/(\pi d^2) \qquad (5)$$

In the thermal fuse having a function of a current fuse of the invention, an alloy containing 40 to 70% Bi is used as the fuse element, and hence the specific resistance ρ is high. As compared with the conventional art example in which the specific resistance p is low, therefore, the diameter d of the fuse element is inevitably made larger in order to set the given resistance r. As a result, the thermal capacity C of the fuse element is large, and, as compared with the characteristic curve of the case where C is small, the temperature drop in the initial stage is therefore gentler, so that an operation at a rush current can be avoided.
Consequently, the allowable maximum current for a short-time current of t = about 5 ms can be made higher without causing the operating current at t = 1,000 s to be varied, so that the rush current resistance performance can be ensured.
The cut-off current $i_0$ with respect to a current which continues for a long time period of, for example, 1,000 s can be obtained by setting t → ∞ in Expression (4), and the following expression holds:

$$i_0 = (Tm - T_0)^{1/2}/(Rr)^{1/2} \qquad (6)$$

Under the same cut-off current $i_0$, the resistance r of the fuse element can be made lower as R (the thermal resistance of the flat lead conductors) is higher. As apparent from Expression (5), as the resistance r is lower, the diameter d of the fuse element can be made larger, so that the thermal capacity C of the fuse element can be made larger and the rush current resistance performance can be enhanced. Therefore, nickel or an iron alloy having a high thermal specific resistance is preferably used in the flat lead conductors. In this case, in order to lower the interface resistance of the bonding interfaces (usually, welding interfaces) between the flat lead conductors and the fuse element, preferably, a thin film of Cu or Ag is disposed at least in the bonding face of each of the flat lead conductors to form an alloy layer of Cu or Ag and the base material in the interface.
It is a matter of course that copper can be used in the flat lead conductors.
In the thermal fuse having a function of a current fuse of the invention, the amount of Bi in the alloy composition of the fuse element is set to 40 to 70% for the following reason. When the amount is smaller than 40%, the specific resistance is so low that the above-mentioned advantage cannot be satisfactorily attained. When the amount is larger than 70%, the specific resistance is too high, and the outer diameter of the fuse element is excessively large. Therefore, the thickness of the body of the thermal fuse having a function of a current fuse, i.e., the height from the lower face of the resin base film to the upper face of the resin cover film is hardly maintained to 2 mm or smaller (the thinness cannot be maintained). Furthermore, it is difficult to conduct a drawing process.
In the invention, the use of an alloy composition of 40 to 70% Bi and the balance In is advantageous to setting of the melting point of the fuse element to 85 to 95°C, and assurance of smooth drawability.
The rush current flows for a very short time period or for about 5 ms, and in an impulsive manner, and hence the fuse element is impulsively heated. Therefore, 0.05 to 5% of at least one of Ag, Cu, Au, Sb, Ni, Pt, Pd, Ge, and P may be added to the alloy composition to enhance the mechanical strength by solid solution hardening, whereby the resistance of the fuse element against a thermal shock due to a rush current can be improved. The addition amount is set to 0.05 to 5% for the following reason. When the addition amount is smaller than 0.05%, the effect of the addition cannot be attained. When the addition amount is larger than 5%, the melting point and specific resistance of the fuse element are largely varied.
In the cut-off current-operating time characteristic shown in Fig. 3, the transient state region in the vicinity of t = 0 participates in the rush current resistance performance. A portion of a flat lead conductor which thermally participates in the transient state is a small restricted portion including the portion to which an end portion of the fuse element is bonded. In the time constant RC, therefore, R (the thermal resistance of the flat lead conductors) does not depend on the width of the conductor, and is in inverse proportion to the thickness h, and C is in proportion to the diameter d of the fuse element. Therefore, RC can be evaluated in terms of d/h. Usually, d/h is set to 2 to 4.

The sectional area of the fuse element is set to 0.032 to 0.33 mm$^2$. The sectional shape of the fuse element may have a circular shape, or a flat shape. In the latter case, d is the diameter of a circle having the same sectional area.

In the thermal fuse having a function of a current fuse of the invention, the resistance r of the fuse element is restricted by the allowable maximum current (1,000 s, 2 to 10 A), and set to 4.5 to 50 mΩ as described above. The temperature rise ΔT of the fuse element under the rating current I can be obtained by setting i → I and t → ∞ in Expression (4), and the following expression holds:

$$\Delta T = RI^2 r \qquad\qquad (7)$$

When I is set to I = 1 A, ΔT is 2°C in the case where nickel conductors are used as the flat lead conductors. In the case where copper lead conductors are used, the temperature rise can be made smaller. Therefore, the degree of the shift of the operating temperature when the fuse operates as a thermal fuse can be made sufficiently small.

The fuse element can be usually produced by a method in which a billet is produced, the billet is shaped into a stock wire by an extruder, and the stock wire is drawn by a dice to a wire. The wire can be finally passed through calender rolls so as to be used as a flat wire.

Alternatively, the fuse element may be produced by the rotary drum spinning method in which a cylinder containing cooling liquid is rotated, the cooling liquid is held in a layer-like manner by a rotational centrifugal force, and a molten material jet ejected from a nozzle is introduced into the cooling liquid layer to be cooled and solidified, thereby obtaining a thin wire member.

In the production, the alloy composition is allowed to contain inevitable impurities which are produced in productions of metals of raw materials and also in melting and stirring of the raw materials.

As the resin films (the resin base film, the resin cover film), useful is a plastic film having a thickness of about 100 to 500 μm. Examples of such a film are engineering plastics such as polyethylene terephtalate, polyethylene naphtalate, polyamide, polyimide, polybutylene terephtalate, polyphenylene oxide, polyethylene sulfide, and polysulfone, engineering plastics such as polyacetal, polycarbonate, polyphenylene sulfide, polyoxybenzoyl, polyether ether ketone, and polyether imide, polypropylene, polyvinyl chloride, polyvinyl acetate, polymethyl methacrylate, polyvinylidene chloride, polytetrafluoroethylene, ethylene-polytetrafluoroethylene copolymer, ethylene-vinyl acetate copolymer (EVA), AS resin, ABS resin, ionomer, AAS resin, and ACS resin.

As the flux, a natural rosin, a modified rosin (for example, a hydrogenated rosin, an inhomogeneous rosin, or a polymerized rosin), or a purified rosin thereof to which wax, hydrochloride of diethylamine, hydrobromide of diethylamine, and the like are added can be used.

In a preferred embodiment of the invention, the composition of the low-melting fusible alloy piece: 47 to 49% Bi and the balance In, the sectional area of the low-melting fusible alloy piece: 0.10 to 0.12 mm$^2$, the thickness of the flat lead conductors: 0.10 to 0.20 mm, the thickness of the body portion: 1.1 to 1.3 mm, the resistance of the low-melting fusible alloy piece: 15 to 16 mΩ, and the nominal operating temperature: 93°C.

[Example]

The fuse of the example is a thermal fuse having a function of a current fuse of the configuration shown in Fig. 1. A film of polyethylene terephtalate having a thickness of 200 μm, a width of 4 mm, and a length of 7.5 mm was used as the resin base film 31 and the resin cover film 32. Copper conductors having a thickness of 150 μm, a width of 3 mm, and a length of 15 mm were used as the flat lead conductors 1. A circular wire having a composition of 52In-48Bi, a sectional area of 0.113 mm$^2$, and a length of 5 mm was used as the fuse element 2. The distance between the welded portions of the fuse element 2 was set to 3.0 mm. A mixture of a rosin and wax was used as the flux. The thickness of the body portion was 1.2 mm, the resistance was 15.7 mΩ, and the nominal operating temperature was 93°C.

[Comparative Example]

The fuse of the comparative example is a thin thermal fuse of the configuration shown in Fig. 4. A film of polyethylene terephtalate having a thickness of 200 μm, a width of 4 mm, and a length of 7.5 mm was used as the resin base film 31' and the resin cover film 32'. Copper conductors having a thickness of 150 μm, a width of 3 mm, and a length of 15 mm were used as the flat lead conductors 1'. A circular wire having a composition of 43In-41Sn-13Cd-3Bi, a sectional area of 0.071 mm$^2$, and a length of 5 mm was used as the fuse element 2'. The distance between the welded portions of the fuse element 2' was set to 3.0 mm. A mixture of a rosin and wax was used as the flux. The thickness of the body portion was 1.1 mm, the resistance was 15.7 m$\Omega$, and the nominal operating temperature was 93°C.

The operation characteristics of the fuses of the example and the comparative example under room temperature were measured, and results shown in Fig. 3 were obtained. The curve A shows the operation characteristics of the fuse of the example, and the curve B shows those of the fuse of the comparative example.

In both the fuses, the operating current at 1,000 s is about 4 A. In the fuse of the comparative example, the operating current at 5 ms is 50 A or smaller, and the provability that the fuse operates at the above-mentioned rush current is high. By contrast, in the fuse of the example, the operating current at 5 ms is larger than 100 A, and does not operate at the above-mentioned rush current. Therefore, the thermal fuse of the invention can be used also as a current fuse for an allowable maximum current. Although the thickness is increased (1.2 mm of the example in contrast to 1.1 mm of the comparative example), the die-gree of the increase is very small.

[Effects of the Invention]

In the thermal fuse having a function of a current fuse according to the invention, even when the thickness or the operating temperature is shifted, the degree of the shift can be suppressed to a low level, and an operation at a rush current can be avoided. Therefore, the thermal fuse can be suitably used also as a current fuse. Consequently, the thermal fuse is very useful as a protector for a secondary battery in which protections with respect to both the allowable maximum temperature and the allowable maximum current are required.

**Claims**

1. A thermal fuse having a function of a current fuse in which a low-melting fusible alloy piece (2) is connected between a pair of flat lead conductors, a flux (4) is applied to said low-melting fusible alloy piece, and said flux-applied low-melting fusible alloy piece is sandwiched between a resin base film (31) and a resin cover film (32) to provide insulation, wherein a resistance of said low-melting fusible alloy piece is set so as to enable said low-melting fusible alloy piece to be fused off also by Joule heat when the current reaches an allowable maximum current value for a secondary battery, and wherein the low-melting fusible alloy piece has an alloy composition containing 40 to 70 % Bi and a resistance of 4.5 to 50 m$\Omega$ so that the operating current at 5 ms is larger than 100 A.

2. A thermal fuse having a function of a current fuse according to claim 1, wherein a melting point of said low-melting fusible alloy piece (2) is 85 to 95°C.

3. A thermal fuse having a function of a current fuse according to claim 1 or 2, wherein front end portions of said pair of flat lead conductors (1) are secured to a rear face of said resin base film (31), a part of each of said front end portions is exposed from a surface of said base film, said low-melting fusible alloy piece is connected between said exposed parts, the flux (4) is applied to said low-melting fusible alloy piece, and an area above said base film is sealed by said resin cover film (32).

4. A thermal fuse having a function of a current fuse according to claim 1 or 2, wherein said pair of flat lead conductors (1), and said flux-applied low-melting fusible alloy piece (2) which is connected between upper faces of tip end portions of said lead conductors are sealed with being vertically sandwiched between said resin cover film (32) and said resin base film (31).

5. A thermal fuse having a function of a current fuse according to any one of claims 1 to 4, wherein a balance of the alloy composition containing 40 to 70% Bi is In and inevitable impurities.

6. A thermal fuse having a function of a current fuse according to any one of claims 1 to 4, wherein a balance of the alloy composition containing 40 to 70% Bi is In, inevitable impurities, and 0.05 to 5% of at least one of Ag, Cu, Au, Sb, Ni, Pt, Pd, Ge, and P.

7. A thermal fuse having a function of a current fuse according to any one of claims 1 to 6, wherein a ratio d/t of an outer diameter d of said low-melting fusible alloy piece to a thickness of each of said flat lead conductors is 2 to 5.

8. A thermal fuse having a function of a current fuse according to any one of claims 1 to 7, wherein a thickness from a lower face of said resin base film (31) to an upper fact of said resin cover film (32) is 2.0 mm or smaller.

9. A thermal fuse having a function of a current fuse according to any one of claims 1 to 8, wherein said flat lead conductors (1) are made of nickel or an iron alloy.

**Patentansprüche**

1. Thermische Sicherung mit einer Funktion einer Stromsicherung, in welcher ein Stück (2) einer niedrig schmelzenden Schmelzlegierung zwischen einem Paar flacher Anschlussleiter verbunden ist, ein Flussmittel (4) auf das Stück der niedrig schmelzenden Schmelzlegierung aufgebracht ist und das mit dem Flussmittel versehene Stück der niedrig schmelzenden Schmelzlegierung zwischen einer Kunstharz-Basisschicht (31) und einer Kunstharz-Deckschicht (32) geschichtet ist, um eine Isolierung zur Verfügung zu stellen, wobei ein Widerstand des Stückes der niedrig schmelzenden Schmelzlegierung so eingestellt ist, dass ein Durchschmelzen des Stücks der niedrig schmelzenden Schmelzlegierung auch durch joulesche Wärme möglich ist, wenn der Strom einer Sekundärbatterie einen zulässigen maximalen Wert erreicht, und wobei das Stück der niedrig schmelzenden Schmelzlegierung eine Legierungszusammensetzung enthaltend 40 bis 70% Bi und einen Widerstand von 4,5 bis 50 mΩ aufweist, so dass der Auslösestrom bei 5 ms größer ist als 100 A.

2. Thermische Sicherung mit einer Funktion einer Stromsicherung gemäß Anspruch 1, wobei ein Schmelzpunkt des Stückes (2) der niedrig schmelzenden Schmelzlegierung 85 bis 95°C ist.

3. Thermische Sicherung mit einer Funktion einer Stromsicherung gemäß Anspruch 1 oder 2, wobei vordere Endabschnitte des Paares flacher Anschlussleiter (1) an einer hinteren Seite der Kunstharz-Basisschicht (31) befestigt sind, jeweils ein Teil der vorderen Endabschnitte von einer Oberfläche der Basisschicht freigelegt ist, das Stück der niedrig schmelzenden Schmelzlegierung zwischen den freiliegenden Teilen verbunden ist, das Flussmittel (4) auf das Stück der niedrig schmelzenden Schmelzlegierung aufgebracht ist und ein Bereich oberhalb der Basisschicht mit der Kunstharz-Deckschicht (32) abgeschlossen ist.

4. Thermische Sicherung mit einer Funktion einer Stromsicherung gemäß Anspruch 1 oder 2, wobei das Paar flacher Anschlussleiter (1) und das mit dem Flussmittel versehene Stück (2) der niedrig schmelzenden Schmelzlegierung, welches zwischen Oberseiten von Spitzen-Endabschnitten der Anschlussleiter verbunden ist, abgeschlossen sind, indem sie vertikal sandwichartig zwischen der Kunstharz-Deckschicht (32) und der Kunstharz-Basisschicht (31) angeordnet sind.

5. Thermische Sicherung mit einer Funktion einer Stromsicherung gemäß einem der Ansprüche 1 bis 4, wobei ein Rest der Legierungszusammensetzung, die 40 bis 70% Bi enthält, In und unvermeidbare Verunreinigungen sind.

6. Thermische Sicherung mit einer Funktion einer Stromsicherung gemäß einem der Ansprüche 1 bis 4, wobei ein Rest der Legierungszusammensetzung, die 40 bis 70% Bi enthält, In, unvermeidbare Verunreinigungen, sowie 0,05 bis 5% von wenigstens einem der Bestandteile Ag, Cu, Au, Sb, Ni, Pt, Pd, Ge und P sind.

7. Thermische Sicherung mit einer Funktion einer Stromsicherung gemäß einem der Ansprüche 1 bis 6, wobei ein Verhältnis d/t eines Außendurchmessers d des Stückes der niedrig schmelzenden Schmelzlegierung zu einer Dicke t jedes der flachen Anschlussleiter 2 bis 5 beträgt.

8. Thermische Sicherung mit einer Funktion einer Stromsicherung gemäß einem der Ansprüche 1 bis 7, wobei eine Dicke von einer Unterseite der Kunstharz-Basisschicht (31) zu einer Oberseite der Kunstharz-Deckschicht (32) 2,0 mm oder weniger beträgt.

9. Thermische Sicherung mit einer Funktion einer Stromsicherung gemäß einem der Ansprüche 1 bis 8, wobei die flachen Anschlussleiter (1) aus Nickel oder einer Eisenlegierung gefertigt sind.

**Revendications**

1. Un élément fusible thermique ayant une fonction d'un fusible de courant dans lequel une pièce d'alliage fusible à point de fusion modéré (2) est connectée entre une paire de conducteurs à fils plats, un flux (4) est appliqué à ladite pièce d'alliage fusible à point de fusion modéré et ladite pièce d'alliage fusible à point de fusion modéré appliqué d'un flux est prise en sandwich entre un film de base en résine (31) et un film de recouvrement en résine (32) pour fournir de l'isolation, où une résistance de ladite pièce d'alliage fusible à point de fusion modéré est fixée de sorte à permettre à ladite pièce d'alliage fusible à point de fusion modéré d'être enlever par fusion également par chaleur Joule quand le courant atteint une valeur de courant maximum permise pour une batterie secondaire, et où la pièce d'alliage fusible à point de fusion modéré a une composition en alliage contenant 40 à 70% de Bi et une résistance de 4,5 à 50 mΩ de sorte que le courant de fonctionnement à 5 ms est supérieur à 100A.

2. Un fusible thermique ayant une fonction d'un fusible de courant selon la revendication 1, où un point de fusion de ladite pièce d'alliage fusible à point de fusion modéré (2) est de 85 à 95°C.

3. Un fusible thermique ayant une fonction d'un fusible de courant selon la revendication 1 ou 2, où les portions d'extrémité avant de ladite paire de conducteurs à fils plats (1) sont fixés à une face arrière dudit film de base en résine (31), une partie de chacune desdites portions d'extrémités avant est exposée depuis une surface dudit film de base, ladite pièce d'alliage fusible à point de fusion modéré est connectée entre lesdites parties exposées, le flux (4) est appliqué à ladite pièce d'alliage fusible à point de fusion modéré, et une aire au-dessus dudit film de base est scellée par ledit film de recouvrement en résine (32).

4. Un fusible thermique ayant une fonction d'un fusible de courant selon la revendication 1 ou 2, où ladite paire de conducteurs à fils plats (1) et ladite pièce d'alliage fusible à point de fusion modéré appliquée d'un flux (2) qui est connectée entre les faces supérieures de portions d'extrémité de tête desdits conducteurs à fils, sont scellés en étant verticalement pris en sandwich entre le film de recouvrement en résine (32) et ledit film de base en résine (31).

5. Un fusible thermique ayant une fonction d'un fusible de courant selon l'une quelconque des revendications 1 à 4, où un reste de la composition d'alliage contenant 40 à 70% de Bi est In et d'inévitables impuretés.

6. Un fusible thermique ayant une fonction d'un fusible de courant selon l'une quelconque des revendications 1 à 4, où un reste de la composition d'alliage contenant 40 à 70% de Bi est In, d'inévitables impuretés, et de 0,005 à 5% d'au moins un parmi Ag, Cu, Au, Sb, Ni, Pt, Pd, Ge, et P.

7. Un fusible thermique ayant une fonction d'un fusible de courant selon l'une quelconque des revendications 1 à 6, où un ratio d/t d'un diamètre extérieur d de ladite pièce d'alliage fusible à point de fusion modéré à une épaisseur t de chacun desdits conducteurs à fil plats est de 2 à 5.

8. Un fusible thermique ayant une fonction d'un fusible de courant selon l'une quelconque des revendications 1 à 7, où une épaisseur d'une face inférieure dudit film de base en résine (31) à une face supérieure dudit film de recouvrement en résine (32) est de 2,0mm ou inférieur.

9. Un fusible thermique ayant une fonction d'un fusible de courant selon l'une quelconque des revendications 1 à 8, où lesdits conducteurs à fils plats (1) sont faits en nickel ou un alliage de fer.

## Fig. 1A

## Fig. 1B

## Fig. 2A

## Fig. 2B

# Fig. 3

Fig. 4

Fig. 5

**EP 1 465 224 B1**

**REFERENCES CITED IN THE DESCRIPTION**

**Patent documents cited in the description**

- JP 2002150906 A
- JP 2000322994 A
- JP 2003013166 A